# EUROPEAN PATENT SPECIFICATION

(11) **EP 1 572 591 B1**
(45) Date of publication and mention of the grant of the patent: **06.05.2009**
(21) Application number: 03785776.0
(22) Date of filing: 09.12.2003
(51) Int. Cl.: C01G 23/00, C09C 1/36

(54) **POWDER MIXTURE CONSISTING OF TITANIUM DIOXIDE, ZINC OXIDE AND ZINC/TITANIUM MIXED OXIDE**
MISCHPULVER BESTEHEND AUS TITANDIOXID, ZINKOXID UND ZINK/TITANMIXOXIDE
MELANGE EN POUDRE COMPOSE DE DIOXYDE DE TITANE, D'OXYDE DE ZINC ET D'UN OXYDE MIXTE DE ZINC/TITANE

(30) Priority: 20.12.2002 DE 10259860
(43) Date of publication of application: 14.09.2005
(73) Proprietor: Evonik Degussa GmbH, 45128 Essen (DE)
(72) Inventor: SCHUMACHER, Kai, 65719 Hofheim (DE); HASENZAHL, Steffen Dr., Morris Plains, NJ 07950 (US); MÖRTERS, Martin, 79618 Rheinfelden (DE)
(86) International application number: PCT/EP2003/013923
(87) International publication number: WO 2004/056706

(56) References cited:
- EP-A- 1 138 632
- EP-A- 1 197 472
- US-A- 4 173 485
- US-A- 4 296 023
- US-A- 5 939 054

## Description

Cosmetic preparations, such as creams or lotions, containing UV filters, which are largely transparent on the skin and are pleasant to use, are used to protect the skin from excessively high intensity UV radiation.

The UV filters they contain comprise one or more organic compounds which absorb within the wavelength range between 290 and 400 nm: UVB radiation (290 to 320 nm), UVA radiation (320 to 400 nm).

The higher-energy UVB radiation causes the symptoms typical of sunburn and is also responsible for suppressing the immune defences, while UVA radiation, which penetrates into the deeper skin layers, causes premature skin ageing. Since the interaction of the two types of radiation can apparently promote the occurrence of dermatological conditions caused by light, such as skin cancer, efforts have long been made to achieve further significant improvements in existing levels of UV protection.

It is known that microfine (ultrafine) pigments based on metal oxides can scatter, reflect and absorb UV radiation. They are accordingly an effective complement to the organic UV filters in sunscreen preparations.

Microfine titanium dioxide is widely used in cosmetic formulations because it is chemically inert and toxicologically safe and causes neither skin irritation nor sensitisation. In addition to titanium dioxide, microfine zinc oxide is also used.

Zinc oxide has long been widely used in pharmaceutically active skin preparations such as powders, ointments, creams and lotions. In cosmetic products, zinc oxide, like titanium dioxide, is used in decorative preparations due to its opacifying and brightening properties. It is for the same reasons that pigment grade zinc oxide has not hitherto become as well established in use in sunscreens as have titanium dioxide pigments. Conventional zinc oxide pigment provides opaque white coverage on surfaces. Zinc oxide has a relatively high refractive index of approx. 2.0. If transparent forms are to be obtained, micronised zinc oxide particles must be used, as is the case with titanium dioxide. Microfine zinc oxide generally has a particle size of 10 to 100 nm and a specific surface area of approx. 10 bis 70 m²/g. Its action extends over the entire UV range, i.e. from UVA radiation via UVB radiation up to UVC. Zinc oxide with a relatively sharp UVA absorption edge at 370 nm absorbs better than titanium dioxide in the UVA range.

Particular problems arise if it is intended to use zinc oxide and titanium dioxide simultaneously in a sunscreen preparation. Such a combination is entirely sensible as zinc oxide absorbs more strongly in the UVA range and titanium dioxide more strongly in the UVB range, which would mean that broadband absorption could be achieved over the entire UV range. However, the two substances have different isoelectric points: TiO₂ approx. 5 to 6 and ZnO approx. 9.5. At a pH value of between 5 and 7, which is typical for cosmetic products, oppositely charged particles may be present, which attract each other and may result in agglomeration or flocculation. This risk primarily occurs when both metal oxides are present in the aqueous phase.

The object of the present invention was accordingly to overcome the existing disadvantages of combined use of titanium dioxide and zinc oxide and to provide a powder which combines the advantages of zinc oxide and titanium dioxide.

The invention provides a powder mixture consisting of a zinc/titanium mixed oxide particles, titanium dioxide particles and zinc oxide particles, wherein the zinc/titanium mixed oxide particles have a composition according to the formula (ZnO)₁₋ₓ(TiO₂)ₓ, where 0.01 < x < 0.99, and are obtained from a thermal process and wherein the powder mixture exhibits remission which, in the UV range from 320 to 400 nm, is lower than that of titanium dioxide and, in the UV range below 320 nm, is lower than that of zinc oxide and wherein the content of zinc/titanium mixed oxide particles is at least 50 wt.% based on the powder mixture.

There are no further restrictions as to the origin of the titanium dioxide and zinc oxide particles. They may originate from thermal or pyrogenic processes, sol/gel processes or precipitation processes.

It is only the zinc/titanium mixed oxide particles for the purposes of the invention which originate from a thermal process. A thermal process may, on the one hand, be taken to involve the conversion of zinc and titanium starting compounds at elevated temperatures. According to the invention, thermal processes may, on the other hand, be taken to comprise pyrogenic processes with subsequent heat treatment of the reaction mixture. A pyrogenic process may be taken to comprise flame hydrolysis or flame oxidation of metal or metalloid compounds in the gas phase in a flame, produced by the reaction of a fuel gas, preferably hydrogen, and oxygen. In such a process, highly disperse primary particles are initially formed which, as the reaction proceeds, may combine to form aggregates and the latter may in turn further congregate to form agglomerates. The BET surface area of these primary particles generally has a value between 5 and 600 m²/g.

It is known to produce zinc/titanium mixed oxide by a pyrogenic process as described in EP-A-1138632. It has, however, been found that, at the desired high zinc oxide contents (>20 wt.%), a non-homogeneous product mixture is obtained which is unsuitable for cosmetic purposes. The product produced according to EP-A-1138632 with a zinc oxide content of approx. 20 wt.% may thus be used for the purposes of the invention.

It is an essential feature of the invention that, in order to achieve remission which, in the UV range from 320 to 400 nm, is lower than that of titanium dioxide and, in the UV range below 320 nm, is lower than that of zinc oxide, the zinc/titanium mixed oxide particles originate from a thermal process.

The powder mixture according to the invention may also contain small quantities of contaminants which are introduced by the starting materials and/or by process contaminants. Said contaminants are present in a quantity of less than 1 wt.%, generally of less than 0.1 wt.%.

In a preferred embodiment of the invention, the content of the zinc/titanium mixed oxide particles in the powder mixture may amount to at least 80 wt.%.

The zinc/titanium mixed oxide particles may preferably have a composition (ZnO)₁₋ₓ(TiO₂)ₓ, where 0.05 < x < 0.80.

The zinc/titanium mixed oxide particles may be amorphous or crystalline. Crystalline zinc/titanium mixed oxide particles may be preferred for the purposes of the invention. Crystalline means that defined reflections are observable in an X-ray diffractogram, the width of which is determined by the size of the primary particles.

It may furthermore be advantageous if the isoelectric point of the powder mixture according to the invention is between that of zinc oxide and that of titanium dioxide. The isoelectric point of zinc oxide is at approx. 9.2, that of titanium dioxide at approx. 5 to 6.

The titanium dioxide particles of the powder mixture according to the invention may have rutile, anatase and brookite modifications, the ratio of which to one another is not limited. Preferably, however, the proportion of the rutile modification of the titanium dioxide particles of the powder mixture according to the invention may amount to at least 1%, relative to the sum of rutile and anatase modification.

In a preferred embodiment, the powder mixture according to the invention may have a BET surface area which is between 1 and 100 m²/g. The range may particularly preferably be between 5 and 40 m²/g. The BET surface area is determined according to DIN 66131.

The chlorine content of the powder mixture according to the invention may, if desired, be less than 500 ppm. In particular embodiments it may be less than 100 ppm.

The invention also provides a process for the production of the powder mixture according to the invention.

The process is characterised in that an aerosol, which contains a zinc compound, is homogeneously mixed with a mixture containing a titanium compound, optionally an inert gas, a fuel gas and a gas containing free oxygen in a mixing chamber of a burner as is used for the production of pyrogenic oxides, the mixture of all the components is ignited at the mouth of the burner and combusted in a cooled flame tube, then the resultant solids are separated from the gaseous reaction products, optionally purified, and thermally treated at temperatures of 400 to 600°C over a period of 0.5 to 8 hours.

The composition of the powder mixture may be varied by modifying the flame parameters and the thermal posttreatment.

The zinc and titanium compound may preferably be present in a ratio such that the powder mixture according to the invention contains between 20 and 95 wt.% of zinc oxide.

Titanium tetrachloride may preferably be used as the titanium compound.

The aerosol may preferably be produced by atomisation by means of a two-fluid nozzle or by an aerosol generator.

Selection of the zinc salt is not restricted in either of the processes according to the invention. Zinc chloride, zinc nitrate and/or organozinc compounds such as zinc acetate may, for example, be used.

The solution of the zinc compound may be an aqueous or organic solution. An aqueous solution is preferred for the purposes of the invention.

The invention also provides a sunscreen preparation which contains the powder mixture according to the invention in a proportion of 0.01 and 25 wt.%. The sunscreen preparation according to the invention may additionally be used in mixtures with known inorganic UV-absorbing pigments and/or chemical UV filters.

Known UV-absorbing pigments which may be considered are titanium dioxides, zinc oxides, aluminium oxides, iron oxides, cerium oxides, zirconium oxides, barium sulfate or mixtures thereof.

Chemical UV filters which may be considered are any water- or oil-soluble UVA and UVB filters known to the person skilled in the art, the following being mentioned by way of non-limiting examples: sulfonic acid derivatives of benzophenones and benzimidazoles, derivatives of dibenzoylmethane, benzylidenecamphor and the derivatives thereof, derivatives of cinnamic acid and the esters thereof, or esters of salicylic acid. Selected examples may be: 2-hydroxy-4-methoxybenzophenone, 2-hydroxy-4-methoxybenzophenone-5-sulfonic acid, 2-hydroxy-4-methoxybenzophenone-5-sulfonate sodium salt, dihydroxydimethoxybenzophenone, dihydroxydimethoxybenzophenone sulfonate sodium salt, tetrahydroxybenzophenone, p-aminobenzoic acid, ethyl p-aminobenzoate, glyceryl p-aminobenzoate, amyl p-dimethylaminobenzoate, octyl p-dimethylaminobenzoate, ethyl p-methoxycinnamate, isopropyl p-methoxycinnamic acid ester, octyl p-methoxycinnamic acid ester, 2-ethylhexyl-p-methoxycinnamic acid ester, p-methoxycinnamic acid ester sodium salt, glyceryl di-p-methoxycinnamic acid ester mono-2-ethylhexanoate, octyl salicylate, phenyl salicylate, homomenthyl salicylate, dipropylene glycol salicylate, ethylene glycol salicylate, myristyl salicylate, methyl salicylate, 4-t-butyl-4-methoxydibenzoylmethane and 2-(2'-hydroxy-5'-methylphenyl)benzotriazole. Among these, 2-ethylhexyl-p-methoxycinnamic acid ester and 4-tert.-butyl-4'-methoxydibenzoylmethane are preferred by virtue of the UV protection they provide and their skin compatibility.

The sunscreen preparation according to the invention may furthermore contain solvents known to the person skilled in the art, such as water, mono- or polyhydric alcohols, cosmetic oils, emulsifiers, stabilisers, consistency regulators such as carbomers, cellulose derivatives, xanthan gum, waxes, bentones, pyrogenic silicas and further substances conventional in cosmetics such as vitamins, antioxidants, preservatives, dyes and fragrances.

The sunscreen preparation according to the invention may typically assume the form of an emulsion (O/W, W/O or multiple), aqueous or aqueous-alcoholic gel or oil gel and be offered for sale in the form of lotions, creams, milk sprays, foam, sticks or other usual forms.

The general preparation of sunscreen preparations is furthermore described in A. Domsch, "Die kosmetischen Präparate", Verlag für chemische Industrie (ed. H. Ziolkowsky), 4th edition, 1992 or N.J. Lowe and N.A. Shaat, Sunscreens, Development, Evaluation and Regulatory Aspects, Marcel Dekker Inc., 1990.

The invention also provides the use of the powder mixture according to the invention as an adsorbent for UV radiation.

### Examples:

Remission is determined by means of a Perkin-Elmer model P554 spectrometer with remission sphere.

The BET surface area is determined according to DIN 66131.

### Example 1:

0.60 kg/h of TiCl₄ are volatilised in a vaporiser at approx. 150°C and the vapour is passed into the mixing chamber of a burner by means of 0.14 Nm³/h of nitrogen. In this chamber, the stream of gas is mixed with 1.4 Nm³/h of hydrogen and 2.0 Nm³/h of dried air and supplied to the flame through the mouth of the burner. The burner consists of two concentric tubes, in the middle of which there is additionally located a two-fluid nozzle for atomising liquids by means of a stream of gas, said nozzle finishing at the level of the mouth of the burner. 0.2 Nm³/h of hydrogen are passed as jacket gas through the outer tube of the burner. 330 ml/h of an aqueous zinc acetate solution (400 g/l) are pumped by means of a gear pump through the liquid tube of the two-fluid nozzle (internal diameter 0.2 mm), the solution being atomised by means of 550 1/h of air. The gases and atomised liquid are combusted in the reaction chamber and cooled to approx. 110°C in a downstream coagulation section. The resultant powder is then deposited in a filter. The powder mixture according to the invention is obtained in a subsequent heat treatment step at 600°C for a duration of 40 minutes.

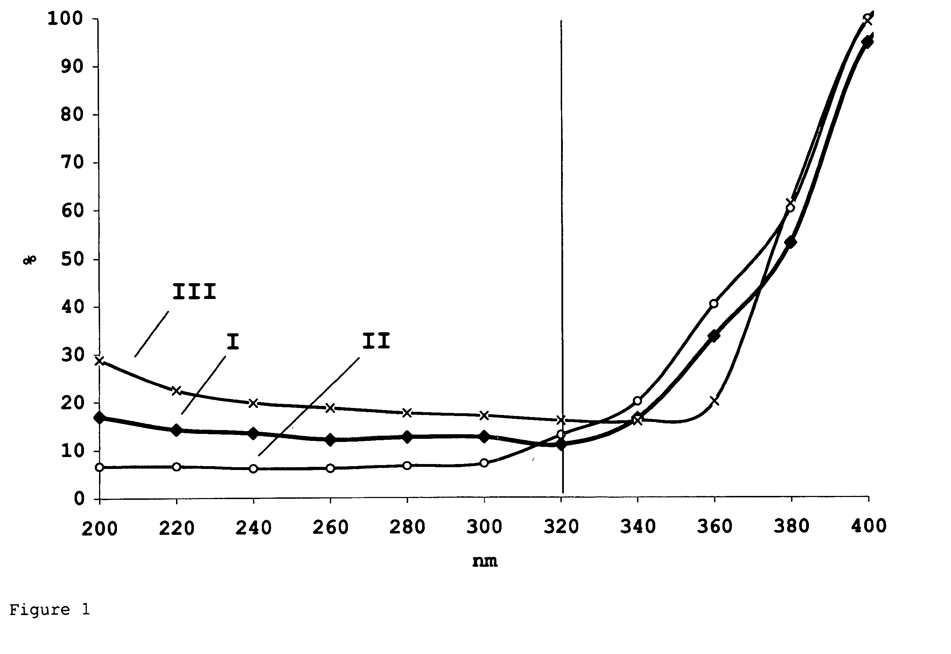

X-ray diffraction analysis of the powder mixture before heat treatment reveals that it comprises a mixture of titanium dioxide and zinc oxychloride (Zn₂OCl₂). X-ray diffraction analysis after heat treatment reveals a mixture of zinc/titanium mixed oxide, titanium dioxide, zinc oxide with a BET surface area of 40 m²/g, a pH value (4% aqueous dispersion) of 6.45, a bulk density of 290 g/l and a tamped density of 340 g/l. Figure 1 shows the remission of this powder mixture.

The titanium dioxide has a rutile/anatase ratio of 30:70 before heat treatment and of 45:55 after heat treatment.

**Figure 1** shows the remission (in %) of the powder from Example 1 (denoted I) in comparison with a pyrogenically produced titanium dioxide (P25, Degussa, II) and a zinc oxide (Nanox 100, Elementis, III) as a function of wavelength. The powder mixture (I) according to the invention exhibit remission which, in the UV range from 320 to 400 nm, is lower than that of titanium dioxide and, in the UV range below 320 nm, is lower than that of zinc oxide.

## Claims

1. A powder mixture consisting of zinc/titanium mixed oxide particles, titanium dioxide particles and zinc oxide particles, wherein the zinc/titanium mixed oxide particles have a composition according to the formula (ZnO)₁₋ₓ(TiO₂)ₓ, where 0.01 < x < 0.99, and are obtained from a thermal process and wherein the powder mixture exhibits remission which, in the UV range from 320 to 400 nm, is lower than that of titanium dioxide and, in the UV range below 320 nm, is lower than that of zinc oxide and wherein the content of zinc/titanium mixed oxide particles is at least 50 wt.% based on the powder mixture.

2. A powder mixture according to claim 1, **characterised in that** the content of zinc/titanium mixed oxide particles is at least 80 wt.%.

3. A powder mixture according to claims 1 or 2, **characterised in that** the zinc/titanium mixed oxide particles have a composition (ZnO)₁₋ₓ(TiO₂)ₓ, where 0.05 < x < 0.80.

4. A powder mixture according to claims 1 to 3, **characterised in that** the zinc/titanium mixed oxide particles are crystalline.

5. A powder mixture according to claims 1 to 4, **characterised in that** the isoelectric point is between that of zinc oxide and that of titanium dioxide.

6. A powder mixture according to claims 1 to 5, **characterised in that** the proportion of the rutile modification of the titanium dioxide particles amounts to at least 1%, relative to the sum of rutile, anatase and brookite modification.

7. A powder mixture according to claims 1 to 6, **characterised in that** the BET surface area is between 1 and 100 m²/g.

8. A powder mixture according to claims 1 to 7, **characterised in that** the chloride content is less than 500 ppm.

9. A process for the production of the powder mixture according to claims 1 to 8, **characterised in that** an aerosol, which contains a zinc compound, is homogeneously mixed with a mixture containing a titanium compound, optionally an inert gas, a fuel gas and a gas containing free oxygen in a mixing chamber of a burner as is used for the production of pyrogenic oxides, the mixture of all the components is ignited at the mouth of the burner and combusted in a cooled flame tube, then the resultant solids are separated from the gaseous reaction products, optionally purified, and thermally treated at temperatures of 400 to 600°C over a period of 0.5 to 8 hours.

10. A process according to claim 9, **characterised in that** the zinc compound and the titanium compound are present in a ratio such that the reaction product contains between 20 and 95 wt.%. of zinc oxide.

11. A process according to claims 9 or 10, **characterised in that** titanium tetrachloride is used as the titanium compound.

12. A process according to claims 9 to 11, **characterised in that** the aerosol is produced by atomisation by means of a two-fluid nozzle or by an aerosol generator.

13. A process according to claims 9 to 12, **characterised in that** zinc chloride, zinc nitrate and/or organozinc compounds are used as the zinc compound.

14. A sunscreen preparation containing the powder mixture according to claims 1 to 8, wherein the content of the powder mixture is between 0.01 and 25 wt.%, relative to the quantity of the sunscreen preparation.

15. Use of the powder mixture according to claims 1 to 8 as an adsorbent for UV radiation.

## Patentansprüche

1. Pulvergemisch bestehend aus Zink-Titan-Mischoxidpartikeln, Titandioxidpartikeln und Zinkoxidpartikeln, wobei die Zink-Titan-Mischoxidpartikel eine Zusammensetzung gemäß der Formel (ZnO)₁₋ₓ(TiO₂)ₓ mit 0,01 < x < 0,99 aufweisen und aus einem thermischen Prozess erhalten werden und wobei das Pulvergemisch eine Remission aufweist, welche im UV-Bereich von 320 bis 400 nm niedriger ist als die von Titandioxid und welche im UV-Bereich kleiner 320 nm niedriger ist als die von Zinkoxid und wobei der Anteil der Zink-Titan-Mischoxidpartikel wenigstens 50 Gew.-%, bezogen auf das Pulvergemisch, beträgt.

2. Pulvergemisch nach Anspruch 1, **dadurch gekennzeichnet, dass** der Anteil der Zink-Titan-Mischoxidpartikel wenigstens 80 Gew.-%, beträgt.

3. Pulvergemisch nach den Ansprüchen 1 oder 2,
**dadurch gekennzeichnet, dass** die Zink-Titan-Mischoxidpartikel eine Zusammensetzung (ZnO)₁₋ₓ(TiO₂)ₓ mit 0,05 < x < 0,80 aufweisen.

4. Pulvergemisch nach den Ansprüchen 1 bis 3, **dadurch gekennzeichnet, dass** die Zink-Titan-Mischoxidpartikel kristallin sind.

5. Pulvergemisch nach den Ansprüchen 1 bis 4, **dadurch gekennzeichnet, dass** der isoelektrische Punkt zwischen dem von Zinkoxid und dem von Titandioxid liegt.

6. Pulvergemisch nach den Ansprüchen 1 bis 5, **dadurch gekennzeichnet, dass** der Anteil der Rutilmodifikation der Titandioxidpartikel, bezogen auf die Summe von Rutil-, Anatas- und Brookitemodifikation, wenigstens 1% beträgt.

7. Pulvergemisch nach den Ansprüchen 1 bis 6, **dadurch gekennzeichnet, dass** die BET-Oberfläche zwischen 1 und 100 m²/g liegt.

8. Pulvergemisch nach den Ansprüchen 1 bis 7, **dadurch gekennzeichnet, dass** der Chloridgehalt kleiner als 500 ppm ist.

9. Verfahren zur Herstellung des Pulvergemisches gemäß den Ansprüchen 1 bis 8, **dadurch gekennzeichnet, dass** man ein Ärosol, welches eine Zinkverbindung enthält, mit einem Gemisch enthaltend eine Titanverbindung, ggf. ein Inertgas, ein Brenngas und ein freien Sauerstoff enthaltendes Gas in einer Mischkammer eines Brenners, wie er zur Herstellung pyrogener Oxide benutzt wird, homogen mischt, das Gemisch aller Komponenten am Brennermund entzündet und in einem gekühlten Flammrohr verbrennt, danach die erhaltenen Feststoffe von den gasförmigen Reaktionsprodukten abtrennt, ggf. reinigt und bei Temperaturen von 400 bis 600°C über einen Zeitraum von 0,5 bis 8 Stunden thermisch behandelt.

10. Verfahren nach Anspruch 9, **dadurch gekennzeichnet, dass** die Zinkverbindung und die Titanverbindung in einem solchen Verhältnis vorliegen, dass das Reaktionsprodukt zwischen 20 und 95 Gew.-% Zinkoxid enthält.

11. Verfahren nach den Ansprüchen 9 oder 10, **dadurch gekennzeichnet, dass** als Titanverbindung Titantetrachlorid eingesetzt wird.

12. Verfahren nach den Ansprüchen 9 bis 11, **dadurch gekennzeichnet, dass** das Ärosol durch Vernebelung mittels einer Zweistoffdüse oder durch einen Ärosolgenerator hergestellt wird.

13. Verfahren nach den Ansprüchen 9 bis 12, **dadurch gekennzeichnet, dass** als Zinkverbindung Zinkchlorid, Zinknitrat und/oder zinkorganische Verbindungen eingesetzt werden.

14. Sonnenschutzmittel enthaltend das Pulvergemisch gemäß den Ansprüchen 1 bis 8, wobei der Anteil des Pulvergemisches zwischen 0,01 und 25 Gew.-%, bezogen auf die Menge des Sonnenschutzmittels, beträgt.

15. Verwendung des Pulvergemisches gemäß den Ansprüchen 1 bis 8 als Adsorbens für UV-Strahlung.

## Revendications

1. Mélange en poudre composé de particules d'oxyde mixte de zinc et de titane, de particules de dioxyde de titane et de particules d'oxyde de zinc, dans lequel les particules d'oxyde mixte de zinc et de titane ont une composition correspondant à la formule (ZnO)₁₋ₓ(TiO₂)ₓ, où 0,01 < x < 0,99, et sont obtenues par un procédé thermique, et dans lequel le mélange en poudre présente une réflectance qui, dans la gamme UV de 320 à 400 nm, est inférieure à celle du dioxyde de titane et, dans la gamme UV en dessous de 320 nm, est inférieure à celle de l'oxyde de zinc, et dans lequel la teneur en particules d'oxyde mixte de zinc et de titane est d'au moins 50 % en poids, rapporté au mélange en poudre.

2. Mélange en poudre selon la revendication 1,
**caractérisé en ce que** la teneur en particules d'oxyde mixte de zinc et de titane est d'au moins 80 % en poids.

3. Mélange en poudre selon les revendications 1 et 2, **caractérisé en ce que** les particules d'oxyde mixte de zinc et de titane ont une composition (ZnO)₁₋ₓ(TiO₂)ₓ, où 0,05 < x < 0,80.

4. Mélange en poudre selon les revendications 1 à 3, **caractérisé en ce que** les particules d'oxyde mixte de zinc et de titane sont cristallines.

5. Mélange en poudre selon les revendications 1 à 4, **caractérisé en ce que** le point isoélectrique se situe entre celui de l'oxyde de zinc et celui du dioxyde de titane.

6. Mélange en poudre selon les revendications 1 à 5, **caractérisé en ce que** la proportion de la modification rutile des particules de dioxyde de titane s'élève à au moins 1 %, par rapport à la somme des modifications rutile, anatase et brookite.

7. Mélange en poudre selon les revendications 1 à 6, **caractérisé en ce que** la surface spécifique BET se situe entre 1 et 100 m²/g.

8. Mélange en poudre selon les revendications 1 à 7, **caractérisé en ce que** la teneur en chlorure est inférieure à 500 ppm.

9. Procédé pour la production du mélange en poudre selon les revendications 1 à 8, **caractérisé en ce qu'**un aérosol, qui contient un composé du zinc, est mélangé de façon homogène avec un mélange contenant un composé du titane, éventuellement un gaz inerte, un gaz combustible et un gaz contenant de l'oxygène libre dans une chambre de mélange d'un brûleur tel qu'on l'utilise pour la production d'oxydes pyrogènes, le mélange de tous les composants est enflammé au niveau de la bouche du brûleur et brûlé dans un tube à flamme refroidi, puis les matières solides résultantes sont séparées des produits de réaction gazeux, éventuellement purifiées, et traitées thermiquement à des températures de 400 à 600°C sur une période de 0,5 à 8 heures.

10. Procédé selon la revendication 9, **caractérisé en ce que** le composé du zinc et le composé du titane sont présents dans un rapport tel que le produit de la réaction contient entre 20 et 95 % en poids d'oxyde de zinc.

11. Procédé selon les revendications 9 et 10,
**caractérisé en ce que** du tétrachlorure de titane est utilisé comme composé du titane.

12. Procédé selon les revendications 9 à 11,
**caractérisé en ce que** l'aérosol est produit par atomisation au moyen d'une buse à deux fluides ou par un générateur d'aérosol.

13. Procédé selon les revendications 9 à 12,
**caractérisé en ce que** du chlorure de zinc, du nitrate de zinc et/ou des composés organozinciques sont utilisés comme composé du zinc.

14. Préparation d'écran solaire contenant le mélange en poudre selon les revendications 1 à 8, dans laquelle la teneur du mélange en poudre se situe entre 0,01 et 25 % en poids par rapport à la quantité de préparation d'écran solaire.

15. Utilisation du mélange en poudre selon les revendications 1 à 8 comme adsorbant pour le rayonnement UV.
